# EUROPÄISCHE PATENTSCHRIFT

(11) **EP 0 894 360 B1**
(45) Veröffentlichungstag und Bekanntmachung des Hinweises auf die Patenterteilung: **16.05.2001**
(21) Anmeldenummer: 97920667.9
(22) Anmeldetag: 12.04.1997
(51) Int. Cl.: H02K 23/54

(54) **ELEKTRISCHE GLEICHSTROM-MASCHINE**
DC ELECTRIC MACHINE
MACHINE ELECTRIQUE A COURANT CONTINU

(30) Priorität: 18.04.1996 DE 19615219; 21.05.1996 DE 19620291
(43) Veröffentlichungstag der Anmeldung: 03.02.1999
(73) Patentinhaber: Schiller, Helmut, 64625 Bensheim (DE)
(72) Erfinder: Schiller, Helmut, 64625 Bensheim (DE)
(74) Vertreter: Helber, Friedrich G., Dipl.-Ing.
(86) Internationale Anmeldenummer: EP9701842
(87) Internationale Veröffentlichungsnummer: WO9740572

(56) Entgegenhaltungen:
- EP-A- 0 164 827
- EP-A- 0 619 638
- WO-A-95/17779
- DE-A- 3 140 437

## Beschreibung

Die Erfindung betrifft eine elektrische Gleichstrom-Maschine.

Es sind sowohl als Motor wie auch als Generator einsetzbare elektrische Gleichstrom-Kollektormaschinen bekannt (z.B. DE 33 24 617 A1), bei denen in einem Gehäuse ein eine Vielzahl von in gleichmäßigen Winkelabständen auf dem gleichen Durchmesser eisenlose Spulen aus elektrischen Leitern tragender Rotor drehbar gelagert ist. Den Spulen stehen beidseitig auf den Innenseiten der Gehäusestirnfläche starr angeordnete Permanentmagneten von in Umfangsrichtung aufeinanderfolgend unterschiedlicher Polarität gegenüber. Die die Spulen bildende Leiter ihrerseits sind an mit dem Rotor umlaufende, elektrisch gegeneinander isolierte Kommutator-Kontaktflächen angeschlossen, auf denen im Gehäuse vorgesehene und gegen die Gehäusewandung isolierte Schleifkontakte aufgedrückt sind, die mit äußeren elektrischen Anschlüssen leitend verbunden sind. Bei Anschluß an eine elektrische Gleichstromquelle arbeiten die so aufgebauten Maschinen als Motor, während sie bei angetriebener Rotorwelle als Generator arbeiten, d.h. an den Anschlüssen elektrischer Gleichstrom abgenommen werden kann. Diese bekannten Gleichstrom-Maschinen finden z.B. als kleine, sehr kompakte Motoren geringer Leistung u.a. als Antriebsmotor für Signalaufzeichnungsgeräte von Video-Signalen Verwendung. Aufgrund der speziellen Anordnung der Rotor-Spulen und der Permanentmagneten und des daraus resultierenden Verlaufs der zusammenwirkenden Felder der Permanentmagneten und der Rotor-Spulen werden derartige Motoren auch als Axialfeldmaschinen bezeichnet. Wegen der erreichbaren guten Wirkungsgrade und ihrer grundsätzlich guten Regelungsmöglichkeiten sind solche Axialfeldmaschinen mit größeren Abmessungen und entsprechend höherer Leistung u.a. auch als Antriebsmotoren für Fahrzeuge vorgeschlagen worden (WO 95/17779).

Der Erfindung liegt die Aufgabe zugrunde, eine solche elektrische Gleichstrom-Maschine mit höheren Leistungen, welche sie auch als Antriebsmotoren für Fahrzeuge geeignet macht, so weiterzubilden, daß sie bei konstruktiv einfachem und somit kostengünstigem Aufbau hohen Wirkungsgrad erzielt.

Erfindungsgemäß wird diese Aufgabe gelöst durch eine elektrische Gleichstrom-Maschine mit einem in einem Gehäuse drehbar gelagerten Rotor, der eine Vielzahl von mit Abstand von der Drehachse angeordneten Elektromagneten mit jeweils einer Spulenwicklung auf einem einen oder mehrere elektrische(n) Leiter tragenden Spulenkern aufweist, wobei die Enden der die Spule bildenden elektrischen Leiter radial nach innen geführt und mit jeweils zugeordneten, insgesamt zusammengenommen einen Kommutator bildenden Kontaktelementen mit jeweils einer Kontaktfläche elektrisch leitend verbunden sind, auf denen im Gehäuse gehaltene an eine Gleichstromquelle bzw. einen Gleichstromverbraucher anschließbare Schleifkontakte angedrückt sind, und mit in gleichmäßigen Winkelabständen auf den Innenseiten der Gehäusestirnwände angeordneten, den Stirnflächen der Spulenkerne gegenüberstehenden Polflächen von Permanentmagneten mit in Umfangsrichtung aufeinanderfolgend jeweils entgegengesetzter Polarität, wobei jeder Spulenkern mit der zugehörigen Spulen-Wicklung ein gesondert hergestelltes Elektromagnet-Bauelement bildet, welche in einem mit der Welle des Rotors drehfest verbundenen Nabenträger gehaltert sind, die Polflächen der Permanentmagnete in Umfangsrichtung eine jeweils mehrere gegenüberstehende Spulenkerne überdeckende Erstreckung aufweisen, die beiden jeweils einem radial außenliegenden Permanentmagneten zugeordneten Schleifkontakte des Kommutators sich in Umfangsrichtung so weit erstrecken, daß sie die Kontaktflächen von jeweils etwa der Hälfte der einer Polfläche eines Permanentmagneten zugeordneten Kontaktelemente überdecken, und wobei zu den Kontaktflächen der den Kommutator bildenden Kontaktelemente versetzt mit den jeweiligen kommutatorseitigen Kontaktflächen elektrisch verbundene Kontaktflächen vorgesehen sind, an denen in der Umfangserstreckung den Kommutator-Schleifkontakten im wesentlichen entsprechende Schleifkontakte angedrückt sind, welche ihrerseits jeweils paarweise elektrisch miteinander verbunden sind.

Die Vorfertigung der Elektromagnet-Bauelemente und ihre nachträgliche Montage in einem Nabenträger stellt den gewünschten einfachen Aufbau und die preisgünstige Montage sicher, wobei es durch die Ausgestaltung derart, daß jedem Permanentmagneten jeweils mehrere Elektromagnet-Bauelemente zugeordnet sind, möglich ist, jeweils die bei laufendem Rotor in das Feld eines Permanentmagneten einlaufenden Elektromagnet-Bauelement durch den Kommutator so anzusteuern, daß sie eine entgegengesetzte Polarität haben und so vom Elektromagneten in Umfangsrichtung angezogen werden. Sobald der Spulenkern des jeweiligen Elektromagnet-Bauelements dann mittig zum Permanentmagneten ausgerichtet ist, erfolgt über die der Kommutator-Kontaktflächen gegenüberliegenden Kontaktflächen eine Umpolung des Spulenkerns, wodurch das Elektromagnet-Bauelement dann gleiche Polarität wie der gegenüberstehende Permanentmagnet hat und in Drehrichtung weitergedrängt wird.

Dabei kann es zweckmäßig sein, wenn die Kontaktflächen der Schleifkontakte des Kommutators und die Kontaktflächen der den Kommutator-Schleifkontakten zugeordneten, paarweise elektrisch miteinander verbundenen Schleifkontakte relativ zueinander in Rotor-Drehrichtung um ein vorgegebenes Maß verstellbar sind. Auf diese Weise kann die wirksame Kontaktfläche der Kommutator-Schleifkontakte in Umfangsrichtung und somit die Charakteristik der Gleichstrom-Maschine verändert werden.

Die Spulenkerne haben vorzugsweise die Form von radial und parallel zur Rotorachse verlaufenden im wesentlichen rechteckigen Scheiben, deren Randbereich mit den radial verlaufenden Stirnkanten über die von ihnen getragene Spulenwicklung vortreten. Diese vortretenden Randbereiche der Spulenkerne wirken dann - insbesondere, wenn sie in Radialrichtung ausgerichtet sind - wie Radialschaufeln eines Gebläses, welches eine Motorkühlung durch Ansaugung von Umgebungsluft im radial inneren Gehäusebereich und Abblasen im radial äußeren Gehäusebereich ermöglicht. Die radial und scheibenförmige Ausbildung der Spulenkerne ermöglicht es außerdem, auf einem vorgegebenen Durchmesser eine große Anzahl von Elektromagnet-Bauelementen vorzusehen, insbesondere dann, wenn die in Frage stehende Maschine nach dem Axialfeld-Prinzip mit relativ großem Durchmesser und geringer axialer Erstreckung ausgebildet wird. Eine optimale Raumausnutzung wird dabei dann erreicht, wenn die Spulenkerne einer rechtwinklig durch die Rotor-Welle gelegten Schnittebene einen von der radial inneren Begrenzungskante zur radial äußeren Begrenzungskante divergierenden Querschnitt haben.

Die elektrischen Leiter eines Elektromagnet-Bauelements können von jeweils einem langgestreckten in wenigstens einer Halbwindung um den Spulenkern herumgeführten elektrischen Leiter, z.B. einem Metallstreifen aus einer Kupferlegierung gebildet werden. Ein aus solchen Elektromagnet-Bauelementen zusammengebauter Rotor hat dann eine hinreichende Eigenstabilität, d.h. benötigt kein oder nur ein skelettartiges Rotorgerüst, so daß die elektrischen Leiter für die Durchströmung mit Luft und somit die Rotorkühlung gut zugänglich sind.

Alternativ können die elektrischen Leiter der Elektromagnet-Bauelemente auch von einer Vielzahl von in seitlicher Nebeneinanderlage in wenigstens einer Halbwindung um den Spulenkern herumgeführten elektrisch leitenden Metalldrähten gebildet werden.

Die Spulenkerne der Elektromagnet-Bauelemente können in radialem Abstand von und im wesentlichen parallel zur Rotor-Drehachse angeordnet sein.

Alternativ können die Spulenkerne der Elektromagnet-Bauelemente auch in radialem Abstand von und so unter einem Winkel zur Rotor-Drehachse geneigt angeordnet sein, daß ihre zu dem Permanentmagneten weisenden gegenüberliegenden Stirnflächen in Umfangsrichtung zueinander versetzt sind. Dabei können die gegenüberliegenden Stirnflächen der Spulenkerne in radialer Richtung gleichen Abstand zur Rotor-Drehachse haben.

Andererseits kann die Ausgestaltung auch so getroffen sein, daß die Spulenkerne der Elektromagnet-Bauelemente in radialem Abstand von und so unter einem Winkel geneigt zur Rotor-Drehachse angeordnet sind, daß ihre gegenüberliegenden, zu den Permanentmagneten weisenden Stirnflächen in radialer Richtung unterschiedlichen Abstand von der Rotor-Drehachse haben.

Sowohl der Stabilisierung der Elektromagnet-Bauelemente im Rotor als auch der Ausbildung seitlich zu den Gehäuse-Stirnwänden abgeschlossenen zur Kühlung nach Art eines Gebläses radial durchströmbaren Kammern dient eine Weiterbildung, bei der die Spulenkerne aller Elektromagnet-Bauelemente durch beidseitig jeweils eine in den stirnflächennahen Endbereichen im Spulenkern vorgesehene Ringscheibe aus magnetisch nicht magnetischem Material miteinander verbunden sind. Die gegenüberliegenden Stirnflächen der Spulenkerne durchsetzen dabei zweckmäßig die jeweils zugeordnete Ringscheibe, so daß der Spalt zwischen den Spulenkern-Stirnflächen und den Polflächen der Permanentmagnete möglichst gering gehalten werden kann.

Eine zweckmäßige und vorteilhafte Ausgestaltung der Permanentmagnete wird erhalten, wenn jeweils zwei in Umfangsrichtung aufeinanderfolgende dem Rotor zugewandte Polflächen unterschiedlicher Polarität der Permanentmagneten von den beiden ins Gehäuseinnere weisenden parallelen Polflächen eines nach Art eines Hufeisenmagnet geformten Permanentmagneten gebildet werden.

Dabei kann dieser hufeisenmagnetartig geformte Permanentmagnet von den rotorzugewandten Stirnflächen von durch die aus unmagnetischem Material bestehenden Gehäuse-Stirnwände hindurchgeführten weichmagnetischen Polschuhen gebildet werden, die außerhalb der jeweils zugeordneten Gehäuse-Stirnwand an jeweils einen Pol eines Permanentmagneten angekoppelt sind. Die Permanentmagnete können dann einfach als gewöhnliche Stabmagnete ausgebildet sein.

Die Polschuhe werden dabei zweckmäßig von Paketen aus in dichter Aneinanderlage gehaltenen gegeneinander jedoch elektrisch isolierten Transformatorenblechen gebildet, um Verluste durch Wirbelströme zu minimieren. Im Falle der Ausbildung der Permanentmagneten aus Polschuhen mit einem Stabmagneten empfiehlt es sich, die gegenüberliegenden Stabenden in jeweils einer zum Stabende zumindest teilweise komplementär geformten Aufnahme im jeweiligen Polschuh zu halten.

Eine parallel zur Rotor-Drehachse verstellbare und innerhalb eines vorgegebenen Verstellbereichs fixierbare Ausgestaltung der Polschuhe in der jeweils zugeordneten Gehäuse-Stirnwand erlaubt es, den Abstand zwischen den Stirnflächen der Spulenkerne der Elektromagnet-Bauelemente des Rotors und den von den gehäuseinneren Stirnflächen der Polschuhe gebildeten Polflächen der Permanentmagnete auf ein gerade noch zulässiges geringes Maß einzustellen und so den Wirkungsgrad der Maschine selbst zu optimieren.

Die Erfindung ist in der folgenden Beschreibung mehrerer Ausführungsbeispiele in Verbindung mit der Zeichnung näher erläutert, und zwar zeigt:
- Fig. 1: im sogenannten Halbschnitt, d.h. in der unteren Hälfte in der Seitenansicht und in der oberen Hälfte entlang einer Radialebene geschnitten, ein Ausführungsbeispiel einer in der erfindungsgemäßen Weise ausgebildete Gleichstrom-Maschine in schematisierter Darstellung;
- Fig. 2: eine Ansicht auf die Innenseite einer die Permanentmagneten tragenden Gehäuse-Stirnwand, gesehen in Richtung der Pfeile 2-2 in Fig. 1;
- Fig. 3: eine Ansicht des aus einer Vielzahl von Elektromagnet-Bauelementen aufgebauten Rotors der Gleichstrom-Maschine, gesehen in Richtung der Pfeile 3-3 in Fig. 1;
- Fig. 4: "eine schematische Darstellung der Umpol-Schaltung aufeinanderfolgender Elektromagnet-Bauelemente des Rotors einer erfindungsgemäßen Gleichstrom-Maschine;
- Fig. 4a: eine schematische Darstellung von einander zugeordneten Schleifkontakten der Umpol-Schaltung in Blickrichtung auf deren Kontaktflächen;
- Fig. 5: eine Seitenansicht eines ersten Ausführungsbeispiels eines erfindungsgemäßen Elektromagnet-Bauelements;
- Fig. 6: eine Ansicht des Elektromagnet-Bauelements, gesehen in Richtung des Pfeils 6 in Fig. 5;
- Fig. 7: eine Seitenansicht eines abgewandelten Ausführungsbeispiels eines Elektromagnet-Bauelements;
- Fig. 8: eine Ansicht, gesehen in Richtung des Pfeils 8 in Fig. 7;
- Fig. 9: ein abgewandeltes Elektromagnet-Bauelement, bei welchem anstelle von streifenförmigen Leitern aus Metall mehrere parallel verlaufende Drähte als Spulenwicklung für den auf dem Spulenkern vorgesehen sind;
- Fig. 10: eine Ansicht, gesehen in Richtung des Pfeils 10 in Fig. 9;
- Fig. 11: eine Seitenansicht eines ebenfalls unter Verwendung einer Vielzahl von parallel geschalteten und in Nebeneinanderlage angeordneten Metalldrähten aufgebauten abgewandelten Elektromagnet-Bauelements;
- Fig. 12: eine Ansicht, gesehen in Richtung des Pfeils 12 in Fig. 11;
- Fig. 13: eine in der Blickrichtung der Fig. 2 entsprechende Ansicht auf die Innenseite einer Gehäuse-Stirnwand mit abgewandelter Ausgestaltung und Anordnung der Permanentmagneten; und
- Fig. 14: eine Ansicht auf den innerhalb des in Fig. 13 durch die Pfeile 14-14 veranschaulichten Bogen gelegenen Teilabschnitte der Gehäuse-Stirnwände und des Rotors eines gegenüber dem Ausführungsbeispiel gemäß Fig. 1 abgewandelten Ausführungsbeispiels einer erfindungsgemäßen Gleichstrom-Maschine.

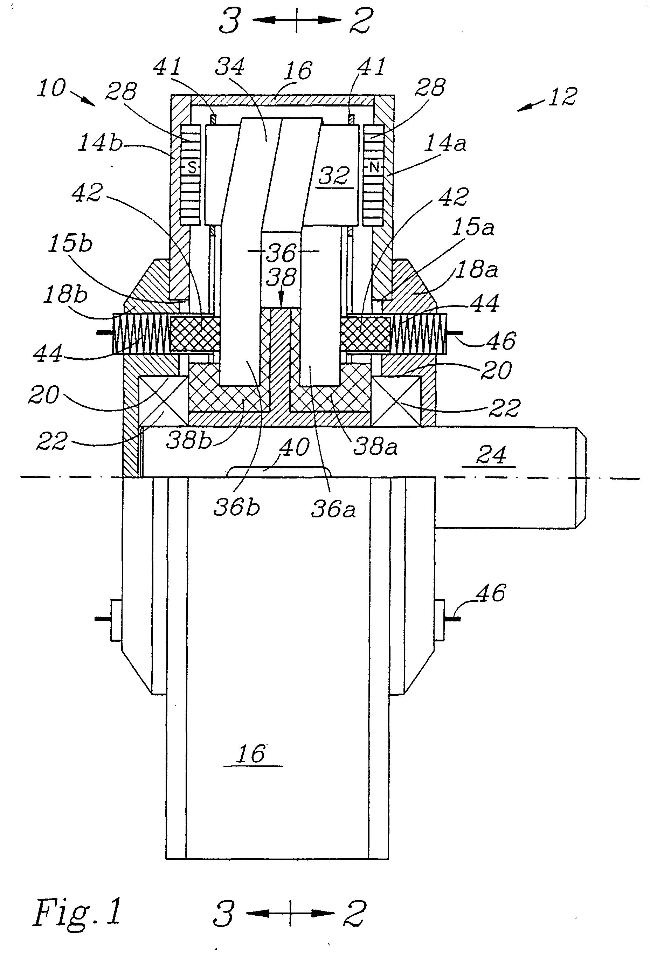

In den Figuren 1 bis 3 ist ein in seiner Gesamtheit mit 10 bezeichnetes Ausführungsbeispiel einer erfindungsgemäßen Gleichstrom-Maschine in schematischer Darstellung gezeigt, welche als Motor und als Generator einsetzbar ist. Die Maschine 10 weist ein im speziellen Fall in Axialrichtung relativ kurz bauendes Gehäuse 12 auf, welches sich aus zwei scheibenartigen Gehäuse-Stirnwänden 14a, 14b relativ großen Durchmessers und der praktisch zu einem zylindrischen Ring relativ geringer Länge umgestalteten eigentlichen Gehäuse-Umfangswand 16 zusammensetzt. Gehäuse-Stirnwände 14a, 14b und Gehäuse-Umfangswand 16 sind durch - nicht gezeigte - Schrauben oder andere Befestigungsmittel demontierbar miteinander verbunden.

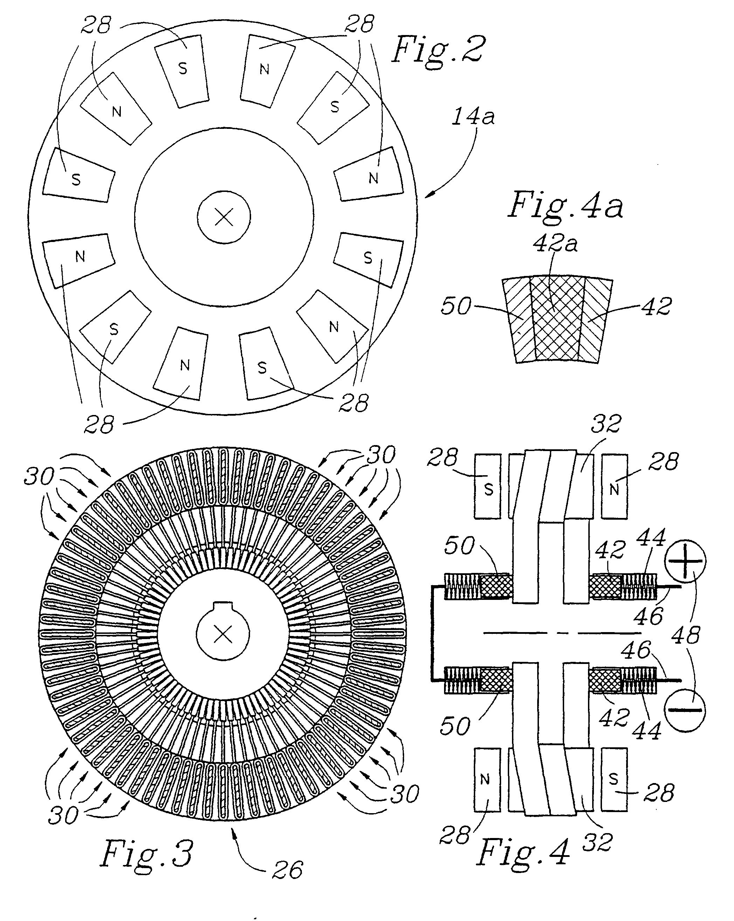

Mittige Durchgangsöffnungen 15a, 15b in den Stirnwänden 14a, 14b sind durch Gehäusedeckel 18a, 18b verschlossen, in welchen jeweils mittig eine Lageraufnahme 20 für ein Radiallager 22 gebildet ist, in denen eine den Gehäusedeckel 18a durchsetzende Welle 24 drehbar gelagert ist. Diese Welle 24 trägt den drehfest auf ihr gehalterten Rotor 26 (Fig. 3).

Auf den inneren Stirnflächen der Gehäuse-Stirnwände 14a, 14b sind in gleichmäßigen Winkelabständen radial möglichst weit nach außen gesetzte Permanentmagneten 28 auf in bezug auf die Gehäuse-Mittelachse gleichen Radien angeordnet. Im dargestellten Fall (Fig. 2) tragen die Stirnwände 14a, 14b jeweils insgesamt zwölf Permanentmagneten, welche in Umfangsrichtung aufeinanderfolgend jeweils entgegengesetzte Polarität haben.

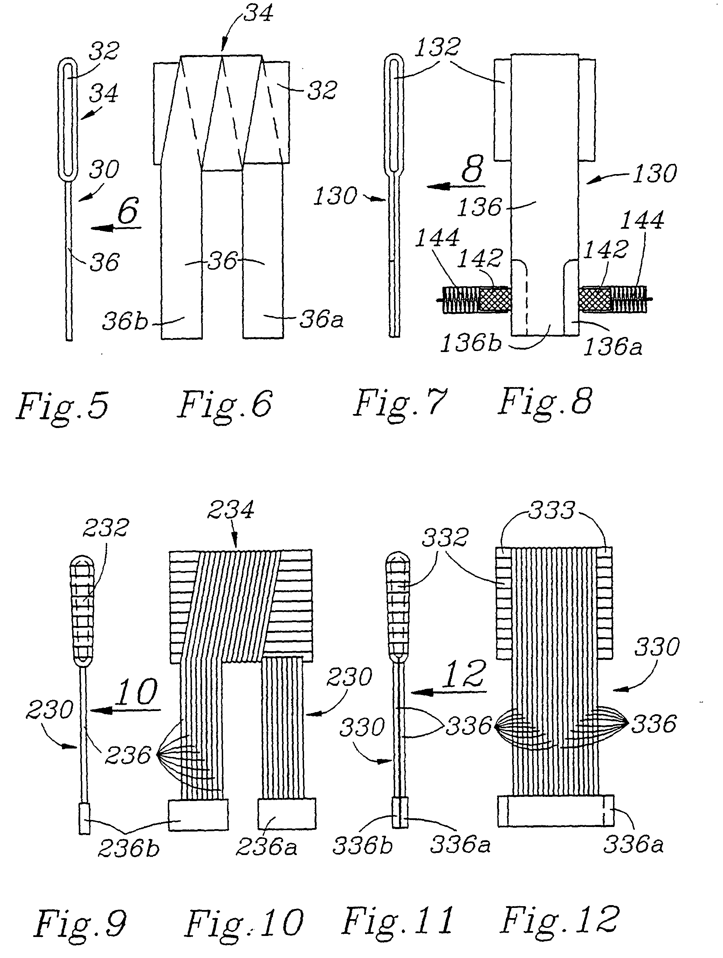

Der Rotor 26 (Fig. 3) ist aus einer Vielzahl von zunächst als gesonderte Einzelbauteile hergestellten Elektromagnet-Bauelementen 30, und zwar im dargestellten Fall insgesamt zweiundsiebzig Bauelementen 30, zusammengebaut. In Fig. 5 und 6 ist ein solches Bauelement 30 gesondert dargestellt. Jedes der Elektromagnet-Bauelemente 30 weist einen als Scheibe aus weichmagnetischem Material ausgebildeten Spulenkern 32 auf, über welchen als Spulenwicklung 34 insgesamt zwei Windungen eines Metall-Streifens gewickelt sind, der zweckmäßig aus einer elektrisch hochleitfähigen Kupferlegierung hergestellt ist. Der Streifen ist in den die Wicklung auf dem Spulenkern bildenden Bereich in üblicher Weise - z.B. durch eine nichtleitende Lackierung - gegen den Spulenkern und benachbarte Bauelemente 30 isoliert. Der Spulenkern 32 seinerseits ist in üblicher Weise zur weitgehenden Unterdrückung von Wirbelströmen aus gegeneinander isolierten und gepackten Transformatorblechen aufgebaut. Die beiden Enden 36a, 36b des Streifens 36 jedes Elektromagnet-Bauelements 30 sind radial nach innen in Richtung zur Welle 24 geführt und dort in einem Nabenträger 38 gehalten, der z.B. in der in Fig. 1 angedeuteten Weise zwei axial zueinander versetzte, jeweils eines der Enden 36a bzw. 36b der Bauelemente 30 aufnehmende Kunststoff-Ringkörpern 38a, 38b aus isolierendem Material aufweist. In diesen Ringkörpern 38a, 38b sind die Streifen-Enden 36a, 36b sämtlich Elektromagnet-Bauelemente 30 gegeneinander isoliert eingegossen gehalten. Durch eine z.B. in Fig. 1 durch eine Keilnut 40 angedeutete Keilverbindung ist der Rotor 26 drehfest mit der Welle 24 verbunden. Der aus dem Nabenträger 38 und der Vielzahl der Elektromagnet-Bauelemente gebildete Rotor 26 ist bei geeigneter Wahl und Bemessung des Materials für die Streifen 36 selbsttragend, wobei alternativ aber eine zusätzliche Versteifung des Rotors durch teilweises Vergießen der zwischen der radial verlaufenden Leiterstreifen 36 bestehenden Zwischenräume denkbar ist. Die scheibenförmigen Spulenkerne 32 treten in Axialrichtung über die Spulenwicklung 34 vor, so daß sie bei laufendem Rotor im Gehäuse eine radial von innen nach außen gerichtete Luftströmung im Gehäuse bewirken. Durch (nicht gezeigte) geeignete Luftzuführkanäle in den Stirnwänden 14a und/oder 14b und Luft-Abführöffnungen im eigentlichen Gehäuse 16 kann bei laufender Maschine eine die Kühlung der Maschine zwangsläufig sicherstellende Zirkulation von Umgebungsluft erzwungen werden. Durch beidseitig auf den axial über die Spulenwicklung 34 vortretenden Bereiche der Spulenkerne 32 aufgesetzte Ringscheiben 41 aus magnetisch nicht leitendem Material kann die Zirkulation der Umgebungsluft auf die Zwischenräume zwischen den Elektromagnet-Bauelementen 30 konzentriert und so die Kühlwirkung optimiert werden. Gleichzeitig stabilisieren diese Ringscheiben 41 die Elektromagnet-Bauelemente, indem sie diese in vorgegebenem radialen Abstand von der Rotor-Drehachse ebenso wie in ihrem Abstand in Umfangsrichtung relativ zueinander fixieren.

Der Anschluß der Elektromagnet-Bauelemente 30 an einer äußeren elektrische Gleichstromquelle, z.B. einen Akkumulator, oder - im Falle des Einsatzes als Generator - an einen Gleichstrom-Verbraucher folgt bei der Maschine 10 über Schleifkontakte 42, die - entsprechend der Darstellung gemäß Fig. 1 - als durch Federn 44 direkt an die - nicht isolierten - stirnwandzugewandten Stirnkanten der radialen Abschnitte der Leiter-Streifen 36 angedrückte Kohlenbürsten ausgebildet sein können. Die nicht isolierten Stirnkanten der Streifen 36 sämtlicher Elektromagnet-Bauelemente 30 bilden zusammengenommen den Kommutator am Rotor 26 der Maschine 10. Alternativ kann der Kommutator natürlich auch von gesondert an den die Spulenwicklung bildenden Leitern angebrachten Kontaktelementen gebildet werden, wenn dies z.B. im Hinblick auf Verschleiß der Kontaktflächen, erwünscht ist. In Verbindung mit den Figuren 9,10 und 11,12 werden nachstehend noch Elektromagnet-Bauelemente beschrieben, bei denen an den die Spulenwicklung bildenden Leitern gesonderte Kontaktelemente für den Kommutator angeschlossen, z.B. angeschweißt sind. Aus der vorstehenden Beschreibung der Gleichstrom-Maschine 10 ist klar, daß die an den Gehäuse-Stirnwänden vorgesehenen, den Spulenkerne 32 der Elektromagnet-Bauelemente 30 gegenüberstehenden Permanentmagneten 28 in Umfangsrichtung eine solche Erstreckung haben, daß ihnen in jedem Augenblick jeweils mehr als drei Elektromagnet-Bauelemente gegenüberstehen. Durch den Kommutator werden die Elektromagneten-Bauteile so mit Strom versorgt, daß die Polarität des Spulenkerns eine zwischen ein Paar zusammengehörender Permanentmagnete eintretenden Elektromagnet-Bauelemente der Polarität der zugeordneten Permanentmagnete entgegengesetzt ist, so daß das jeweilige Bauelement 30 durch die magnetische Wechselwirkung zwischen Permanentmagnete gezogen wird. Bei Erreichen der halben Umfangserstreckung der Permanentmagneten erfolgt dann eine Umpolung der Elektromagnet-Bauelemente 30, damit durch die dann erfolgende entgegengesetzte Polarisierung des Spulenkerns ein Abstoßen und somit ein zwangsläufiges Weiterdrehen des Rotors bewirkt wird. Dies wird durch die in Fig. 4 schematisch dargestellte Schaltung erreicht. In der Zeichnung sind zwei in Umfangsrichtung zueinander versetzte, in der Umfangserstreckung aber noch jeweils dem gleichen Permanentmagneten zugeordnete Elektromagnet-Bauelemente 30 gezeigt, die über Leitungen 46 an die zugehörige Gleichstromquelle 48, z.B. einen Akkumulator angeschlossen sind. Die Schleifkontakte 42 haben dabei eine Umfangserstreckung, welche maximal der halben Umfangserstreckung eines Permanentmagneten 28 entspricht, so daß über den jeweiligen Leiter 36 also die Erregung des jeweiligen Spulenkerns 32 im angestrebten Sinn derart erfolgt, daß das jeweilige Bauelement 30 während der ersten Hälfte des Eintritts zwischen ein zusammengehörendes Paar von Permanentmagneten 28 angezogen wird. Sobald der jeweilige Spulenkern 32 über die Mitte des augenblicklich gegenüberstehenden Paares von Permanentmagneten 28 hinwegtritt, wird der Stromfluß von der Gleichstromquelle 48 über ein Paar von elektrisch miteinander verbundenen Schleifkontakten 50 umgekehrt, so daß die Polarität des im jeweiligen Spulenkern 32 erzeugten Magnetfeldes sich umkehrt und dann gleich der Polarität des jeweils gegenüberstehenden Permanentmagneten-Paars ist. Der Spulenkern 32 und somit das jeweilige Elektromagnet-Bauelement 30 wird dann aus dem zusammengehörenden Paar von Permanentmagneten 28 verdrängt, d.h. der Rotor 26 erhält einen ihn weiter in Drehrichtung drängenden Impuls.

In Fig. 4a ist außerdem schematisch veranschaulicht, daß die in der Draufsicht auf ihre Kontaktflächen etwa trapezförmig begrenzten, einander zugeordneten Schleifkontakte 42 und 50 auch in Rotor-Drehrichtung zueinander versetzt angeordnet sein können. Im dargestellten Fall kann ein Strom nur in den Elektromagnet-Bauelementen 30 fließen, an deren Kommutator-Flächen der kreuzschraffierte Bereich 42a angedrückt ist, im dem sich die Kontaktflächen 42 und 52 überschneiden. Durch Änderung der relativ zueinander verdrehten Anordnung der Kontaktflächen der Schleifkontakte 42, 52 kann also die wirksame Kontaktfläche vergrößert bzw. verkleinert und so die Charakteristik der Gleichstrom-Maschine bezüglich des Drehzahl/Drehmomenten-Verhaltens verändert und auf diese Weise unterschiedlichen Anforderungen angepaßt werden kann. Dabei kann sogar daran gedacht werden, die Möglichkeit einer Relativverdrehung der einander zugeordneten Schleifkontakte von Hand oder durch eine automatische Steuerung während des Betriebs veränderbar auszubilden, um so die Drehzahl oder das Drehmoment gewollt oder selbsttätig an unterschiedlichen Bedingungen anzupassen.

In den Figuren 7 und 8 ist eine Abwandlung des bereits beschriebenen, in den Figuren 5 und 6 dargestellten Elektromagnet-Bauelements 30 gezeigt, welche insgesamt mit 130 bezeichnet ist. Der den Spulenkern 132 mit hier nur einer Halbwindung umgebende elektrische Leiter hat wieder die Form eines - entsprechend breiteren - Streifens 136 aus hochleitendem Metall, dessen Enden 136a, 136b an den jeweils gegenüberliegenden Stirnkanten so bearbeitet sind, daß auf jeder Seite nur die Stirnkante eines der Enden für die Anlage eines Schleifkontakts 142 zugänglich ist. Die bearbeiteten Endbereiche 136a, 136b der Elektromagnet-Bauelemente 130 bilden zusammengenommen also wiederum den Kommutator. Wesentlich ist, daß die einander zugewandten Innenflächen des Leiter-Streifens 136 durch eine geeignete Beschichtung gegeneinander bzw. den Spulenkern 132 isoliert sind.

Die in den Figuren 9 und 10 gezeigte Abwandlung eines Elektromagnet-Bauelements 230 unterscheidet sich vom Bauelement 30 dadurch, daß anstelle des streifenförmigen Leiters 36 für die Spulenwicklung 234 eine Anzahl von parallel geschalteten Leitern 236 aus Kupferdraht vorgesehen sind, die im speziellen Fall in zwei Windungen um den Spulenkern 232 herumgeführt sind. Die radial nach innen geführten Enden sind in gesonderten metallischen Kontaktelementen 236a, 236b gehalten, beispielsweise eingeschweißt. Diese metallischen Kontaktelemente der Elektromagnet-Bauelemente 230 insgesamt bilden wiederum den Kommutator. Außerdem können sie auch zur Festlegung der Bauelemente 230 im Nabenkörper des Rotors geeignet ausgebildet sein. Der Spulenkern 232 seinerseits ist in diesem Fall aus einem Block aus isolierend aufeinandergeschichteten und miteinander verbundenen Transformatorblechen durch mechanische Bearbeitung so geformt, daß er sich in Radialrichtung nach außen erweitert und somit bezüglich des Kernquerschnitts den im Gehäuse zur Verfügung stehenden Raum optimal ausnutzt. Die die Spulen-wicklung 234 seitlich nach außen überragenden Bereiche sind dabei gegenüber dem die Spulenwicklung 234 tragenden Bereich vergrößert, so daß die Spulenwicklung gegen seitliches Wandern auf dem Spulenkern 232 gesichert ist.

In den Figuren 11 und 12 ist schließlich eine mit 330 bezeichnete Abwandlung des Elektromagnet-Bauelements 130 gezeigt, bei der wiederum der streifenförmige Leiter 136 durch eine Vielzahl von parallelen Kupferdrähten 336 ersetzt ist. Die dichte Nebeneinanderlage um den Spulenkern 232 geführten Drähte sind ihrerseits wiederum an den Enden in Kontaktelementen 336a, 336b z. B. eingelötet oder angeschweißt, welche an gegenüberliegenden Seiten in entgegengesetzte Richtung überstehen, so daß sie wiederum stirnseitig die Kontaktflächen für Kommutator-Schleifkontakte bilden. Die Kupferdrähte können in üblicher Weise durch eine isolierende Lackierung in den einanderliegenden und über den Spulenkern 332 geführten Bereichen isoliert sein, wobei die zwischen den Kontaktelementen 336a, 336b vorzusehende isolierende Trennschicht 337 weiter zwischen die beiden parallelen Kupferdraht-Abschnitte bis zum Spulenkern 232 geführt ist. Neben der Sicherstellung der Isolierung der Kontaktelemente 336a, 336b und der Kupferdrähte gegeneinander kann diese Isolierschicht dann auch die Steifigkeit des Elektromagnet-Bauelements 330 insgesamt erhöhen. Zur Verhinderung des Abgleitens der Kupferdrähte 336 vom Spulenkern 332, sind in den überstehenden Bereichen kurze vortretende Ansätze 333 vorgesehen.

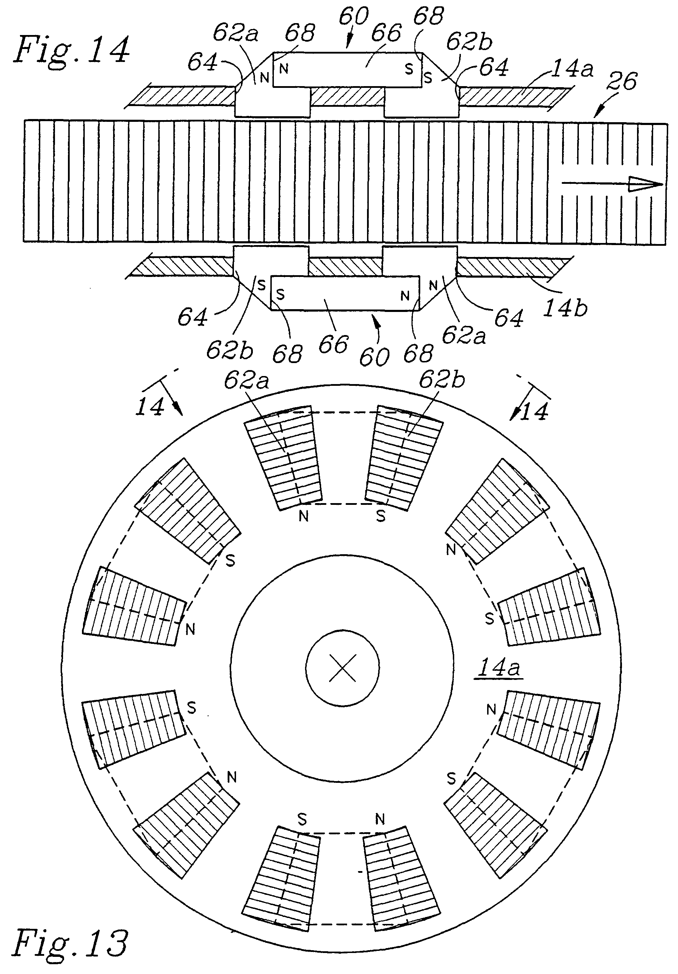

In den Figuren 13 und 14 ist ein vorteilhaft abgewandeltes Ausführungsbeispiel der Ausgestaltung des Gehäuses 12 des in Verbindung mit den Figuren 1 bis 3 beschriebenen Ausführungsbeispiels der erfindungsgemäßen Gleichstrom-Maschine gezeigt. Die getroffene Abänderung bezieht sich insbesondere auf die Ausbildung der Permanentmagnete. Während bei dem zuvor beschriebenen Ausführungsbeispiel abwechselnd flache plattenförmige Permanentmagnete 28 mit aufeinanderfolgend jeweils in entgegengesetzter Polarität auf der dem Rotor 26 zugewandten Innenseite der Gehäuse-Stirnwände 14a, 14b angeordnet sind, werden bei abgewandeltem Ausführungsbeispiel jeweils zwei in Umfangsrichtung aufeinanderfolgende Permanentmagneten von den Polenden eines nach Art eines Hufelsenmagnet geformten Permanentmagneten 60 gebildet. Die im speziellen Fall von gesonderten Polschuhen 62a, 62b gebildeten Polenden der Permanentmagneten 60 sind dabei selbst weichmagnetische aus geschichteten Transformatorenblechen hergestellte Bauelemente, welche passende Öffnungen 64 in den aus unmagnetischem Material - z.B. aus Kunststoff - hergestellten Gehäuse-Stirnwänden 14a, 14b durchsetzen. Auf der rotorabgewandten Außenseite sind die beiden Polschuhe 62a, 62b dann durch den eigentlichen, als Stabmagneten 66 ausgebildeten Permanentmagneten verbunden. Durch Ausbildung geeigneter, d.h. die Enden des Stabmagneten 66 passend aufnehmender Aufnahmen 68 in den Polschuhen 62a, 62b wird eine optimale magnetische Ankopplung des Stabmagneten 66 an den Polschuhen 62a, 62b sichergestellt. Durch eine in den Zeichnungsfiguren nicht näher dargestellte verstellbare und in wählbaren Verstellstellungen fixierbare Halterung der Polschuhe 62a, 62b in den Öffnungen 64 der Stirnwände 14a, 14b kann der zwischen den Stirnflächen der Spulenkerne 32 der Elektromagnet-Bauelemente 30 und den diesen zugewandten Stirnflächen der Polschuhe konstruktiv erforderliche Spalt zur Sicherstellung eines möglichst guten Wirkungsgrades optimiert werden.

Es ist ersichtlich, daß im Rahmen der Ansprüche Abwandlungen und Weiterbildungen der beschriebenen Ausführungsbeispiele verwirklichbar sind, welche sich sowohl auf die Ausgestaltung der Elektromagnet-Bauelemente als auch deren Halterung und Befestigung im Nabenkörper und die Ausbildung des Kommutators beziehen.

So kann die Form, insbesondere die Querschnittsform, der Spulenkerne der Elektromagnet-Bauelemente auch von der beschriebenen scheibenförmigen Ausgestaltung abweichen. Wenn eine geringere Anzahl von Elektromagnet-Bauelementen zu einem Rotor zusammengestellt werden sollen, können auch einfache stabförmige Spulenkerne mit - beispielsweise - kreisförmigem Querschnitt vorgesehen werden.

Abweichend von der beschriebenen parallelen Anordnung der Spulenkerne in bezug auf die Rotor-Drehachse kann es auch sinnvoll sein, die Spulenkerne leicht schräg in Umfangsrichtung und/oder Radialrichtung geneigt anzuordnen.

## Patentansprüche

1. Elektrische Gleichstrom-Maschine (10) mit einem in einem Gehäuse (12) drehbar gelagerten Rotor (26), der eine Vielzahl von mit Abstand von der Drehachse angeordneten Elektromagneten mit jeweils einer Spulenwicklung (34, 234) auf einem einen oder mehrere elektrische(n) Leiter tragenden Spulenkern (32; 132; 232; 332) aufweist, wobei die Enden der die Spule bildenden elektrischen Leiter radial nach innen geführt und mit jeweils zugeordneten, insgesamt zusammengenommen einen Kommutator bildenden Kontaktelementen mit jeweils einer Kontaktfläche elektrisch leitend verbunden sind, auf denen im Gehäuse gehaltene an eine Gleichstromquelle (z.B. 48) bzw. einen Gleichstromverbraucher anschließbare Schleifkontakte (42; 142) angedrückt sind, und mit in gleichmäßigen Winkelabständen auf den Innenseiten der Gehäusestirnwände (14a; 14b) angeordneten, den Stirnflächen der Spulenkerne (32; 132; 232; 332) gegenüberstehenden Polflächen von Permanentmagneten (28) mit in Umfangsrichtung aufeinanderfolgend jeweils entgegengesetzter Polarität, wobei jeder Spulenkern (32; 132; 232; 332) mit der zugehörigen Spulen-Wicklung ein gesondert hergestelltes Elektromagnet-Bauelement bildet, welche in einem mit der Welle (24) des Rotors (26) drehfest verbundenen Nabenträger (38) gehaltert sind, die Polflächen der Permanentmagnete (28) in Umfangsrichtung eine jeweils mehrere gegenüberstehende Spulenkerne (32; 132; 232; 332) überdeckende Erstreckung aufweisen, die beiden jeweils einem radial außenliegenden Permanentmagneten (28) zugeordneten Schleifkontakte (42) des Kommutators sich in Umfangsrichtung so weit erstrecken, daß sie die Kontaktflächen von jeweils etwa der Hälfte der einer Polfläche eines Permanentmagneten (28) zugeordneten Kontaktelemente überdecken, und wobei zu den Kontaktflächen der den Kommutator bildenden Kontaktelemente versetzt mit den jeweiligen kommutatorseitigen Kontaktflächen elektrisch verbundene Kontaktflächen vorgesehen sind, an denen in der Umfangserstreckung den Kommutator-Schleifkontakten (42) im wesentlichen entsprechende Schleifkontakte (50) angedrückt sind, welche ihrerseits jeweils paarweise elektrisch miteinander verbunden sind.

2. Gleichstrom-Maschine nach Anspruch 1, dadurch gekennzeichnet, daß die Kontaktfläche der Schleifkontakte (42) des Kommutators und die Kontaktflächen der den Kommutator-Schleifkontakten (42) zugeordneten, paarweise elektrisch miteinander verbundenen Schleifkontakte (50) relativ zueinander in Rotor-Drehrichtung verstellbar sind.

3. Gleichstrom-Maschine nach Anspruch 1 oder 2, dadurch gekennzeichnet, daß die Spulenkerne (32; 132; 232; 332) die Form von im wesentlichen rechteckigen Scheiben aufweisen, deren Randbereich mit den radial verlaufenden Stirnkanten über die von ihnen getragene Spulenwicklung vortreten.

4. Gleichstrom-Maschine nach Anspruch 3, dadurch gekennzeichnet, daß die Randbereiche in Radialrichtung über die Spulenwicklung vortreten.

5. Gleichstrom-Maschine nach Anspruch 3 oder 4, dadurch gekennzeichnet, daß die Spulenkerne (232) in bezug auf eine rechtwinklig durch die Rotor-Drehachse gelegten Schnittebene einen von der radial inneren Begrenzungskante zur radial äußeren Begrenzungskante divergierenden Querschnitt haben.

6. Gleichstrom-Maschine nach einem der Ansprüche 1 bis 5, dadurch gekennzeichnet, daß die elektrischen Leiter der Elektromagnet-Bauelemente (30; 131) von jeweils wenigstens einem langgestreckten in wenigstens einer Halbwindung um den Spulenkern (32; 132) herumgeführten Streifen aus elektrisch leitendem Metall gebildet werden.

7. Gleichstrom-Maschine nach einem der Ansprüche 1 bis 5, dadurch gekennzeichnet, daß die elektrischen Leiter der Elektromagnet-Bauelemente (230; 330) von einer Vielzahl von in seitlicher Nebeneinanderlage in wenigstens einer Halbwindung um den Spulenkern (232; 332) herumgeführten elektrisch leitenden Metalldrähten gebildet werden.

8. Gleichstrom-Maschine nach einem der Ansprüche 1 bis 7, dadurch gekennzeichnet, daß die Spulenkerne (32; 132; 232; 332) der Elektromagnet-Bauelemente (30) in radialem Abstand von und im wesentlichen parallel zur Rotor-Drehachse angeordnet sind.

9. Gleichstrom-Maschine nach einem der Ansprüche 1 bis 7, dadurch gekennzeichnet, daß die Spulenkerne (32; 132; 232; 332) der Elektromagnet-Bauelemente (30) in radialem Abstand von und so unter einem Winkel zur Rotor-Drehachse geneigt angeordnet sind, daß ihre zu den Polflächen der Permanentmagnete (23) weisenden gegenüberliegenden Stirnflächen in Umfangsrichtung zueinander versetzt sind.

10. Gleichstrom-Maschine nach Anspruch 9, dadurch gekennzeichnet, daß die gegenüberliegenden Stirnflächen der Spulenkerne (32; 132; 232; 332) in radialer Richtung gleichen Abstand zur Rotor-Drehachse haben.

11. Gleichstrom-Maschine nach einem der Ansprüche 1 bis 7 oder Anspruch 8, dadurch gekennzeichnet, daß die Spulenkerne (32; 132; 232; 332) der Elektromagnet-Bauelemente (30) in radialem Abstand von und so unter einem Winkel geneigt zur Rotor-Drehachse angeordnet sind, daß ihre gegenüberliegenden, zu den Polflächen der Permanentmagnete (28) weisenden Stirnflächen in radialer Richtung unterschiedlichen Abstand von der Rotor-Drehachse haben.

12. Gleichstrom-Maschine nach einem der Ansprüche 1 bis 11, dadurch gekennzeichnet, daß die Spulenkerne (32) aller Elektromagnet-Bauelemente (30) durch beidseitig jeweils eine in den stirnflächennahen Endbereichen der Spulenkerne vorgesehene Ringscheibe (41) aus nicht magnetischem Material miteinander verbunden sind.

13. Gleichstrom-Maschine nach Anspruch 12, dadurch gekennzeichnet, daß die gegenüberliegenden Stirnflächen der Spulenkerne (32) die jeweils zugeordnete Ringscheibe (41) durchsetzen.

14. Gleichstrom- Maschine nach einem der Ansprüche 1 bis 13, dadurch gekennzeichnet, daß jeweils zwei in Umfangsrichtung aufeinander folgende dem Rotor (26) zugewandte Polflächen unterschiedlicher Polarität der Permanentmagneten (28) von den beiden ins Gehäuseinnere weisenden parallelen Polflächen eines nach Art eines Hufeisenmagneten geformten Permanentmagneten gebildet werden.

15. Gleichstrom-Maschine nach Anspruch 14, dadurch gekennzeichnet, daß die rotorzugewandten Stirnflächen der Permanentmagneten an durch die aus unmagnetischem Material bestehenden Gehäuse-Stirnwände (14a; 14b) hindurchgeführten weichmagnetischen Polschuhen (62a; 62b) ausgebildet sind, die außerhalb der Gehäuse-Stinwände an jeweils einem Pol eines Permanentmagneten angekoppelt sind.

16. Gleichstrom-Maschine nach Anspruch 15, dadurch gekennzeichnet, daß die Polschuhe (62a; 62b) von Paketen aus in dichter Aneinanderlage gehaltenen gegeneinander jedoch elektrisch isolierten Transformatorenblechen gebildet werden.

17. Gleichstrom-Maschine nach Anspruch 15 oder 16, dadurch gekennzeichnet, daß die Permanentmagnete jeweils als Stabmagnete (66) ausgebildet sind, deren gegenüberliegende Stabenden in jeweils einer zum Stabende zumindest teilweise komplementär geformten Aufnahme (68) im jeweiligen Polschuh (62a; 62b) gehalten sind.

18. Gleichstrom-Maschine nach einem der Ansprüche 15 bis 17, dadurch gekennzeichnet, daß die Polschuhe (62a; 62b) parallel zur Rotor-Drehachse verstellbar und innerhalb eines vorgegebenen Verstellbereichs fixierbar in der jeweils zugeordneten Gehäuse-Stirnwand (14a; 14b) gehalten sind.

## Claims

1. Direct current electrical machine (10) including a rotor (26), which is rotatably mounted in a housing (12) and has a plurality of electromagnets, arranged spaced from the axis of rotation, with a respective coil winding (34, 234) on a coil core (22; 132; 232; 332) carrying one or more electrical conductors, whereby the ends of the electrical conductors constituting the coil extend radially inwardly and are electrically conductively connected to respective associated contact elements, with a respective contact surface, together constituting a commutator, pressed against which are sliding contacts (42; 142), which are mounted in the housing and are connectable to a direct current source (e.g. 48) or a direct current consumer, and including pole surfaces, which are arranged at uniform angular spacings on the internal surfaces of the housing end walls (14a; 14b) and are opposed to the end surfaces of the coil cores (32; 132; 232; 332), of permanent magnets (28) with a polarity which is successively reversed in the peripheral direction, whereby each coil core (32; 132; 232; 332) constitutes together with the associated coil winding a separately manufactured electromagnet unit, which is mounted in a hub carrier (38) rotationally fixedly connected to the shaft (24) of the rotor (26), the pole surfaces of the permanent magnets (28) have an extent in the peripheral direction overlapping with a plurality of opposing coil cores (32; 132; 232; 332), the two sliding contacts (42) of the commutator, which are associated with a radially outer permanent magnet (28), extend so far in the peripheral direction that they overlap with the contact surfaces of about half the contact elements associated with a pole surface of a permanent magnet (28), and whereby contact surfaces are provided, which are offset from the contact surfaces of the contact elements constituting the commutator and are electrically connected to the respective contact surfaces on the commutator side and against which in the peripheral extent of the commutator sliding contacts (42) substantially corresponding sliding contacts (50) are pressed, which for their part are electrically connected together in pairs.

2. Direct current machine as claimed in Claim 1, characterised in that the contact surface of the sliding contacts (42) of the commutator and the contact surfaces of the sliding contacts (50), which are associated with the commutator sliding contacts (42) and are electrically connected together in pairs, are adjustable relative to one another in the direction of rotation of the rotor.

3. Direct current machine as claimed in Claim 1 or 2, characterised in that the coil cores (32; 132; 232; 332) have the shape of substantially rectangular discs, the edge region of which projects with the radially extending end edges beyond the coil winding carried by them.

4. Direct current machine as claimed in Claim 3, characterised in that the edge regions project in the radial direction beyond the coil winding.

5. Direct current machine as claimed in Claim 3 or 4, characterised in that the coil cores (232) have a cross-section diverging from the radially inner boundary edge to the radially outer boundary edge with respect to a sectional plane positioned at right angles through the axis of rotation of the rotor.

6. Direct current machine as claimed in one of Claims 1 to 5, characterised in that the electrical conductors of the electromagnet units (30; 131) are constituted by at least one respective elongate strip of electrically conductive material extending in at least a semi-winding about the coil core (32; 132).

7. Direct current machine as claimed in one of Claims 1 to 5, characterised in that the electrical conductors of the electromagnetic units (230; 330) are constituted by a plurality of electrically conductive metal wires extending in laterally adjacent positions in at least a semi-winding around the coil core (232; 332).

8. Direct current machine as claimed in one of Claims 1 to 7, characterised in that the coil cores (32; 132; 232; 332) of the electromagnet units (30) are arranged at a radial spacing from and substantially parallel to the axis of rotation of the rotor.

9. Direct current machine as claimed in one of Claims 1 to 7, characterised in that the coil cores (32; 132; 232; 332) of the electromagnet units (30) are arranged at a radial spacing from and inclined at an angle to the axis of rotation of the rotor so that their opposed end surfaces directed towards the pole surfaces of the permanent magnets (28) are offset from one another in the peripheral direction.

10. Direct current machine as claimed in Claim 9, characterised in that the opposed end surfaces of the coil cores (32; 132; 232; 332) have the same spacing from the rotor axis in the radial direction.

11. Direct current machine as claimed in one of Claims 1 to 7 or Claim 8, characterised in that the coil cores (32; 132; 232; 332) of the electromagnet units (30) are arranged at a radial spacing from and inclined at an angle to the axis of rotation of the rotor so that their opposed end surfaces directed towards the pole surfaces of the permanent magnets (28) have different spacings from the axis of rotation of the rotor in the radial direction.

12. Direct current machine as claimed in one of Claims 1 to 11, characterised in that the coil cores (32) of all the electromagnet units (30) are connected together by means of a respective annular disc (41) of non-magnetic material provided on both sides in the end regions of the coil cores close to the end surfaces.

13. Direct current machine as claimed in Claim 12, characterised in that the opposed end surfaces of the coil cores (32) pass through the respective associated annular disc (41).

14. Direct current machine as claimed in one of Claims 1 to 13, characterised in that two successive pole surfaces in the peripheral direction, which are directed towards the rotor (26), of different polarity of the permanent magnets (28) are constituted by the two parallel pole surfaces, which are directed into the interior of the housing, of a permanent magnet shaped in the manner of a horseshoe magnet.

15. Direct current machine as claimed in Claim 14, characterised in that the end surfaces, directed towards the rotor, of the permanent magnets are formed on soft magnetic pole shoes (62a; 62b), which pass through the housing end walls (14a; 14b) comprising non-magnetic material and which are coupled outside the housing end walls to a respective pole of a permanent magnet.

16. Direct current machine as claimed in Claim 15, characterised in that the pole shoes (62a; 62b) are constituted by packages of transformer laminations which are held in close engagement with one another but are electrically insulated.

17. Direct current machine as claimed in Claim 15 or 16, characterised in that the permanent magnets are each in the form of bar magnets (66), the opposite bar ends of which are held in a respective recess (68), which is shaped at least partially complementarily to the bar end, in the respective pole shoe (62a; 62b).

18. Direct current machine as claimed in one of Claims 15 to 17, characterised in that the pole shoes (62a; 62b) are mounted in the associated housing end wall (14a; 14b) so as to be movable parallel to the axis of rotation of the rotor and fixable in position within a predetermined range of movement.

## Revendications

1. Machine électrique à courant continu (10) comportant un rotor (26) qui est monté tournant dans une carcasse (12) et présente un grand nombre d'électro-aimants placés à distance de l'axe de rotation et ayant chacun un enroulement en bobine (34, 234) sur un noyau (32 ; 132 ; 232 ; 332) portant un ou plusieurs conducteurs électriques, les extrémités des conducteurs électriques formant la bobine étant menées radialement vers l'intérieur et étant en liaison conductrice avec des éléments de contact respectivement associés, réunis en totalité et formant un collecteur qui ont chacun une surface de contact et contre lesquels sont serrés des contacts glissants (42 ; 142) montés dans la carcasse et pouvant être reliés à une source de courant continu (par exemple 48) ou à un récepteur de courant continu, et des faces polaires d'aimants permanents (28) placées à des distances angulaires égales sur les faces intérieures des parois frontales (14a ; 14b) de la carcasse et opposées aux faces frontales des noyaux (32 ; 132 ; 232 ; 332), avec polarités alternant dans la direction circonférentielle, chaque noyau (32 ; 132 ; 232 ; 332) formant avec l'enroulement associé un élément électro-aimant fabriqué séparément qui est monté dans un support moyeu (38) joint sans liberté de rotation relative à l'arbre (24) du rotor (26), les faces polaires des aimants permanents (28) ayant chacune dans la direction circonférentielle une étendue qui couvre plusieurs noyaux opposés (32 ; 132 ; 232 ; 332), les deux contacts glissants (42) du collecteur associés chacun à un aimant permanent situé extérieurement radialement (28) s'étendant suffisamment dans la direction circonférentielle pour couvrir les surfaces de contact d'environ la moitié des éléments de contact associés à une face polaire d'un aimant permanent (28), et étant prévues, décalées des surfaces de contact des éléments de contact formant le collecteur, des surfaces de contact qui sont reliées électriquement aux surfaces de contact côté collecteur respectives et contre lesquelles sont serrés des contacts glissants (50) qui correspondent sensiblement en étendue circonférentielle aux contacts glissants (42) du collecteur et sont eux-mêmes reliés électriquement par paires.

2. Machine à courant continu selon la revendication 1, caractérisée par le fait que les surfaces de contact des contacts glissants (42) du collecteur et les surfaces de contact des contacts glissants (50) associés aux contacts glissants (42) du collecteur et reliés électriquement par paires sont déplaçables les unes par rapport aux autres dans la direction de rotation du rotor.

3. Machine à courant continu selon l'une des revendications 1 et 2, caractérisée par le fait que les noyaux (32 ; 132 ; 232 ; 332) ont la forme de plaques sensiblement rectangulaires dont les zones de bord ayant les côtés frontaux s'étendant radialement dépassent de l'enroulement qu'elles portent.

4. Machine à courant continu selon la revendication 3, caractérisée par le fait que les zones de bord dépassent de l'enroulement dans la direction radiale.

5. Machine à courant continu selon l'une des revendications 3 et 4, caractérisée par le fait que les noyaux (232) présentent, par rapport à un plan coupant à angle droit l'axe de rotation du rotor, une section qui diverge du côté limite intérieur radialement vers le côté limite extérieur radialement.

6. Machine à courant continu selon l'une des revendications 1 à 5, caractérisée par le fait que les conducteurs électriques des éléments électro-aimants (30 ; 130) sont formés chacun d'au moins une bande allongée de métal conducteur qui passe autour du noyau (32 ; 132) en au moins une demi-spire.

7. Machine à courant continu selon l'une des revendications 1 à 5, caractérisée par le fait que les conducteurs électriques des éléments électro-aimants (230 ; 330) sont formés d'un grand nombre de fils métalliques conducteurs qui passent, placés côte à côte, autour du noyau (232 ; 332) en un au moins une demi-spire.

8. Machine à courant continu selon l'une des revendications 1 à 7, caractérisée par le fait que les noyaux (32 ; 132 ; 232 ; 332) des éléments électro-aimants (30) sont placés à distance radiale de l'axe de rotation du rotor et sensiblement parallèlement à cet axe.

9. Machine à courant continu selon l'une des revendications 1 à 7, caractérisée par le fait que les noyaux (32 ; 132 ; 232 ; 332) des éléments électro-aimants (30) sont placés à distance radiale de l'axe de rotation du rotor et inclinés d'un certain angle par rapport à cet axe de façon que leurs faces frontales opposées dirigées vers les faces polaires des aimants permanents (28) soient décalées l'une de l'autre dans la direction circonférentielle.

10. Machine à courant continu selon la revendication 9, caractérisée par le fait que les faces frontales opposées des noyaux (32 ; 132 ; 232 ; 332) sont à égale distance dans la direction radiale de l'axe de rotation du rotor.

11. Machine à courant continu selon l'une des revendications 1 à 7 ou la revendication 8, caractérisée par le fait que les noyaux (32 ; 132 ; 232 ; 332) des éléments électro-aimants (30) sont placés à distance radiale de l'axe de rotation du rotor et inclinés d'un certain angle par rapport à cet axe de façon que leurs faces frontales opposées dirigées vers les faces polaires des aimants permanents (28) soient à des distances différentes dans la direction radiale de l'axe de rotation du rotor.

12. Machine à courant continu selon l'une des revendications 1 à 11, caractérisée par le fait que les noyaux (32) de tous les éléments électro-aimants (30) sont reliés de chaque côté par un disque annulaire (41) en matière non magnétique prévu dans les zones d'extrémité des noyaux voisines des faces frontales.

13. Machine à courant continu selon la revendication 12, caractérisée par le fait que les faces frontales opposées des noyaux (32) traversent chacune le disque annulaire (41) associé.

14. Machine à courant continu selon l'une des revendications 1 à 13, caractérisée par le fait que chaque fois deux faces polaires, de polarités différentes, des aimants permanents (28) se suivant dans la direction circonférentielle et dirigées vers le rotor (26) sont formées par les deux faces polaires parallèles, dirigées vers l'intérieur de la carcasse, d'un aimant permanent du genre aimant en fer à cheval.

15. Machine à courant continu selon la revendication 14, caractérisée par le fait que les faces frontales, dirigées vers le rotor, des aimants permanents sont formées sur des épanouissements polaires magnétiques doux (62a ; 62b) qui traversent les parois frontales, en matière non magnétique (14a ; 14b) de la carcasse et sont accouplés chacun, à l'extérieur des parois frontales de la carcasse, à un pôle d'un aimant permanent.

16. Machine à courant continu selon la revendication 15, caractérisée par le fait que les épanouissements polaires (62a ; 62b) sont formés par des paquets de tôles pour transformateurs serrées les unes contre les autres mais isolées électriquement les unes des autres.

17. Machine à courant continu selon l'une des revendications 15 et 16, caractérisée par le fait que les aimants permanents sont formés de barreaux aimantés (66) dont les extrémités opposées sont montées chacune dans un logement (68) de forme au moins en partie complémentaire de celle de l'extrémité du barreau fait dans l'épanouissement polaire respectif (62a ; 62b).

18. Machine à courant continu selon l'une des revendications 15 à 17, caractérisée par le fait que les épanouissements polaires (62a ; 62b) sont montés dans la paroi frontale associée (14a ; 14b) de la carcasse de façon à pouvoir être déplacés parallèlement à l'axe de rotation du rotor et être fixés à l'intérieur d'un domaine fixé de déplacement.
